# EUROPEAN PATENT SPECIFICATION

(11) **EP 0 765 537 B1**
(45) Date of publication and mention of the grant of the patent: **05.12.2001**
(21) Application number: 94932162.4
(22) Date of filing: 05.07.1994
(51) Int. Cl.: H02G 3/38

(54) **WIRING INSTALLATION METHOD FOR MODULAR BUILDING STRUCTURES**
VERKABELUNGSMETHODE FÜR MODULBAUELEMENTEN
PROCEDE D'INSTALLATION DE CABLES DESTINES A DES STRUCTURES DE BATIMENTS MODULAIRES

(43) Date of publication of application: 02.04.1997
(73) Proprietor: EMMERT SECOND LIMITED PARTNERSHIP A NEVADA LIMITED PARTNERSHIP, Oklahoma City, OK 73127 (US)
(72) Inventor: EMMERT, Raymond, L., Oklahoma City, OK 73127 (US)
(74) Representative: Wombwell, Francis
(86) International application number: US9407440
(87) International publication number: WO9601513

(56) References cited:
- DE-A- 2 721 797
- US-A- 2 941 027
- US-A- 4 163 349
- US-A- 4 375 010
- US-A- 4 631 881

## Description

### Technical Field

This invention relates to sandwich panels and more particularly to factory fabricated field assembled modular building structures and a method of wiring assembly efficiently utilizing laminated sandwich panels.

There has been much effort and extensive work done in recent years to find solutions to the housing and building needs of third world countries and other low income areas of the world.

Heretofore, most of the efforts to solve the housing and community building needs for the less fortunate have met with little or no success. There are numerous reasons why others have had little success but the primary reason is that no one has been able to deliver a low cost, pre-packaged, factory fabricated, efficient, easy to assemble, structurally sound aesthetically appealing unit to the area of need. In order to meet such demanding criteria, it is necessary to provide a pre-engineered, insulted structural panel which can be produced and fabricated to exacting dimensional and structural standards and then effectively utilize that panel not only for the walls and partitions but also for containing the electrical wiring.

This invention discloses a novel and unique building system which minimizes labor erection costs by utilizing laminated structural panels for the walls and a completely self supporting cathedral type roof.

### Background Art

United States patent number 4,375,010 issued February 22, 1983 to Mollenkopf for PANEL CONSTRUCTION INCLUDING ELECTRICAL CONNECTORS discloses a modular panel wall system for office partitions having connectable prewired electrical harness in top panel raceways and transition connectors coupling the electrical lines across connecting posts on which the panels are mounted.

The raceways are formed by upwardly open panel cavity in the top edge portion of the respective panel which terminates short of the respective vertical frame assembly which include vertical structural frame members that form a main vertical support post for the panels.

A wiring harness having a length less than the width of a single panel is then inserted into each of the upwardly open panel cavities with the harness provided with a connector at the respective end of the panel section of harness. A separate wiring transition harness then bridges the panel supporting post position between adjacent panels in which the bridging harness is provided with cooperative adapters at its respective ends for connection with the adjacent end of the respective panel harness.

United States patent number 4,163,349 issued August 7, 1979 to Smith for INSULATED BUILDING PANELS discloses a multiple panel wall structures, preferably assembled as wall units at an off-site location, in which the upper limit of the panel outer skins extend upwardly beyond its core portion to form an upwardly open channel which is partially filled by a spaced-apart pair of headers respectively adjacent the upper inner limit of the respective panel skin. The space between the spaced-apart headers above each panel is selectively filled by spacers which may serve as a header splice plate of a thickness which, when combined with the thickness of the header plates, produces a header beam assembly equal in width with the dimension lumber member used at the base of the multipanel wall. The panel skins are nailed to the respective header plates and the splice plates and with the spacers substantially completely filling the upwardly open double header beam area above the respective panel core. Selected panels are provided with vertically disposed grooves through which wiring may be extended downwardly through open areas between adjacent ends of spacers or between a splice plate and spacer.

### Disclosure of The Invention

This invention in general comprises modular components for forming building structures of a particular design.

According to the present invention there is provided the method of electrical wiring the walls of a modular building structure formed by a plurality of upstanding juxtaposed laminated sandwich panels, each panel having a core and having an upwardly open groove in their uppermost end surface of the core forming a wire receiving horizontal groove and having vertical wire receiving slots in selected panels communicating with the channel and open at their respective depending end through a wall of the respective panel, characterised by the steps of, a) providing a building structure wiring harness unit having a continuous length, between terminal ends, substantially equal with a predetermined portion of a wall to be wired and having longitudinally spaced laterally extending runs equal in number with the selected number of vertical slots open at their depending ends through a panel wall, and, b) inserting said lateral runs into the vertical wall slots while simultaneously laying the continuous length of wiring harness unit in the horizontal groove.

The principal object of this invention is to provide light weight building structure modules formed from a plurality of insulating panels joined in longitudinal juxtaposed edge wall position having an upwardly open wire harness receiving groove in the top surface of a structure perimeter wall formed by a cooperating plurality of the structural modules.

Another object is to disclose a method of electrically wiring a modular building structure.

### Brief Description of The Drawings

Figure 1 is a partially exploded, partly in section, perspective view of a building constructed in accordance with the invention;
Figure 2 is a fragmentary perspective view of the area encompassed by the arrow 2 of Fig. 1;
Figure 3 is a fragmentary horizontal cross sectional view taken along the line 3---3 of Fig. 1;
Figure 4 is a fragmentary vertical cross sectional view, to an enlarged scale, taken along the line 4---4 of Fig. 1; and,
Figure 5 is a fragmentary partially exploded isometric view.

### Best Mode For Carrying Out The Invention

The reference numeral 10 indicates a building formed in accordance with this invention. The building 10 may be rectangular, as shown, or any desired perimeter configuration having a floor 12, upstanding walls 14, a roof assembly 16 and a roof apex open box frame assembly 18. The walls of the building 10 are formed by juxtaposed panel members 20. The structure of the panels 20 is fully disclosed in my United States patent, number 5,081,810, which briefly stated comprises structural boards 22 or skins, bonded to opposing sides of a core formed thickness of synthetic insulating material 24.

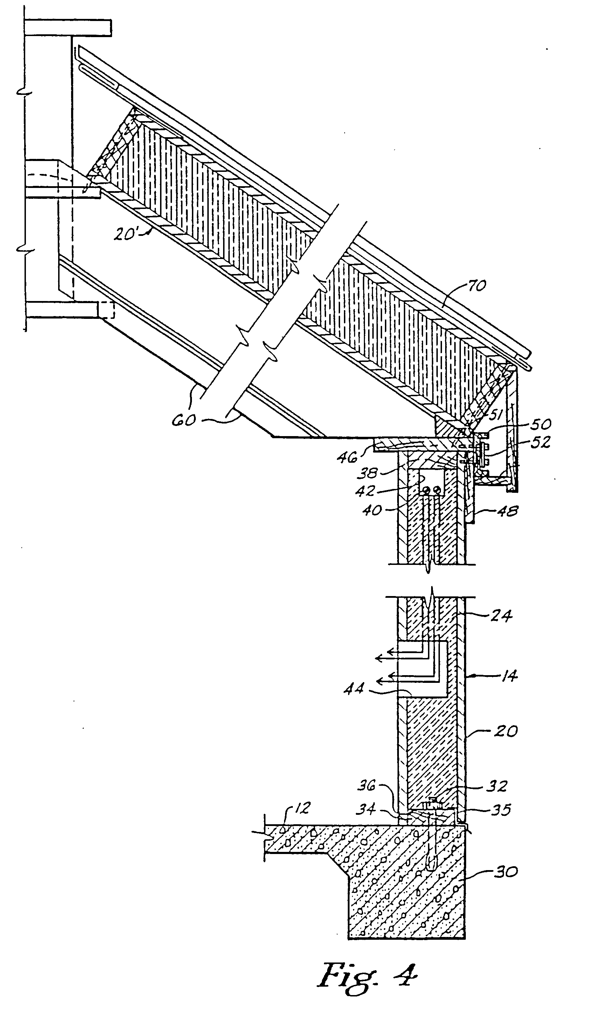

The skins 22 project beyond opposing ends of the core insulating material 24 (Fig. 4) a selected distance sufficient for receiving dimension lumber therebetween and electrical wiring harness in a core top end surface horizontal groove 42, as presently explained.

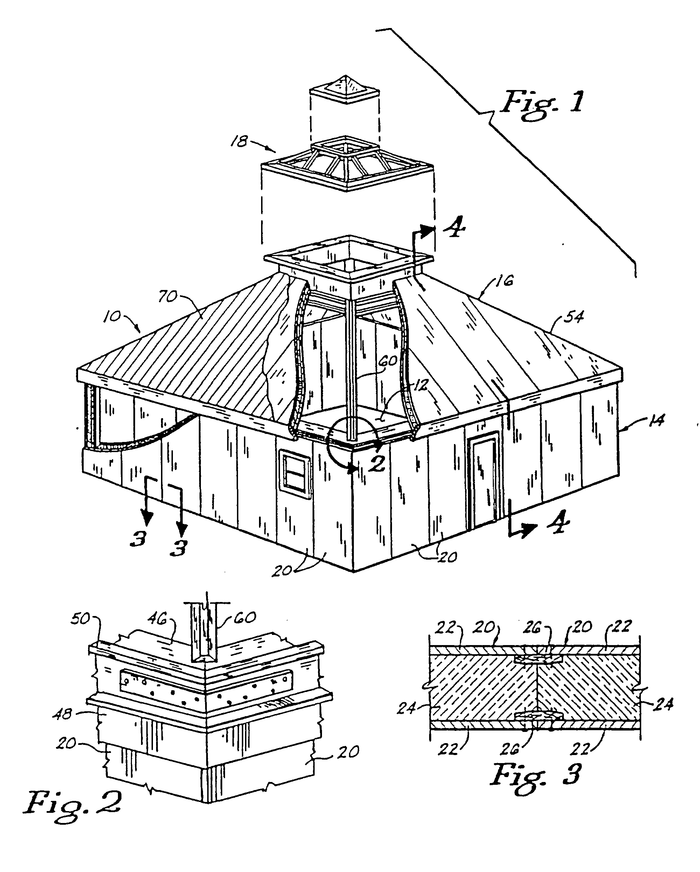

Longitudinal edges of each panel have the insulating material recessed inwardly adjacent the respective inner surface of the respective skin for receiving splines 26 (Fig. 3) for joining two adjacent panels 20 to each other in edgewise juxtaposed relation.

Each panel 20 is further provided with a pair of longitudinally extending stiffeners, not shown, extending the full length and transversely the thickness of the insulating material to add rigidity to the respective panel.

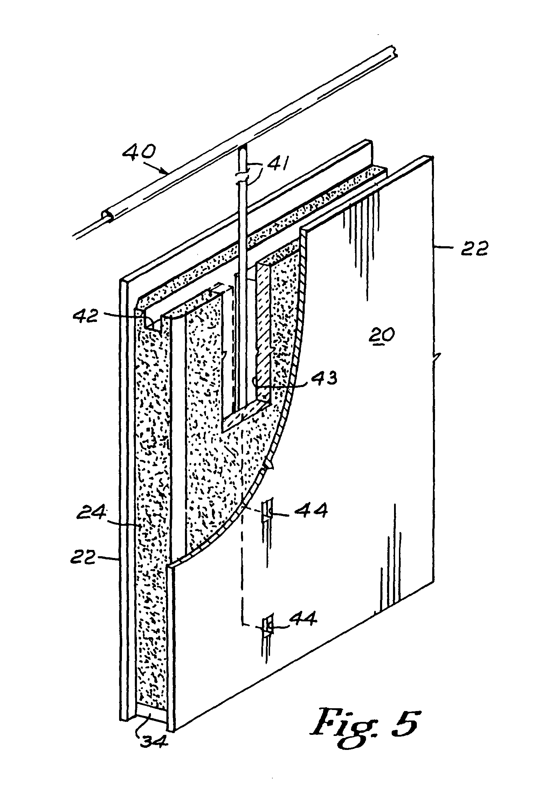

Referring also to Figs. 4 and 5, the concrete floor 12 and the footing 30 forms the foundation for the building 10. Anchor bolts 32 in the concrete secure a sole plate 34 thereto. Elongated lengths of drain flashing, indicated by the bold line 35, overlies the outer lateral and upper edge portions of the sole plate and foundation.

The required plurality of the panels 20 are joined together in longitudinal edgewise juxtaposed position by the splines 26 as described hereinabove, to form each wall 14.

Each wall 14 is raised into position over the sole plate 34 wherein the panel bottom recess 36, formed by the skins 22 projecting beyond the bottom end of the respective panel 20, nests the sole plate 34. The skins are secured to opposing sides of the sole plate and the outer skin caulked, not shown. Adjacent wall end panels are cooperatively rabbeted in interlocking relation.

Similarly, a top rail 38 is nested by a similar recess in the top edges of each wall 14 formed by panels 20, thus rigidly securing the top and bottom edges of the wall panels 20 forming a wall 14.

Prior to applying the top rail 38, wires 40 which preferably comprises a complete wiring assembly or "harness" unit 40 having a selected number of lateral electrical control wire runs 41 is laid in panel wall top end portion horizontal grooves 42 and communicating vertical grooves or slots 43 preformed in selected panels to electrical outlet box positions 44 located on panel inner surfaces.

After installing the wiring harness unit 40, a top plate 46 overlies and is secured to the top rail 38. A face plate 48 coextensive with the respective wall 14 overlies its upper outer edge surface under the overhanging edge of the plate 46.

A U-shaped wall reinforcing member 50 extends around the perimeter of the building at the upper limit at its walls and projects above the plane of the top plate to form a roof stop 51 to prevent lateral movement of the roof assembly 16 relative to the walls 14.

The roof assembly 16 including the box frame 18 and its rails 60, the truncated apex triangular roof sections 54 overlayed with roofing 70 is then installed on the upper limit of the walls top plate 46 against the stop 51.

## Claims

1. The method of electrical wiring the walls of a modular building structure (10) formed by a plurality of upstanding juxtaposed laminated sandwich panels (20), each panel having a core (24) and having an upwardly open groove in their uppermost end surface of the core forming a wire receiving horizontal groove (42) and having vertical wire receiving slots (43) in selected panels communicating with the channel and open at their respective depending end through a wall of the respective panel, **characterised by** the steps of, a) providing a building structure wiring harness unit (40) having a continuous length, between terminal ends, substantially equal with a predetermined portion of a wall to be wired and having longitudinally spaced laterally extending runs (41) equal in number with the selected number of vertical slots (43) open at their depending ends through a panel wall, and, b) inserting said lateral runs (41) into the vertical wall slots (43) while simultaneously laying the continuous length of wiring harness unit (40) in the horizontal groove (42).

2. The method of claim 1, wherein the wiring harness comprises lengths of electrical wiring (40), respectively substantially equal in length with a predetermined length of the horizontal groove (42) and the length of the respective vertical slot (43) depending from said wire receiving channel in said channel and slots.

## Patentansprüche

1. Verfahren zum elektrischen Verdrahten von Wänden einer modularen Gebäudestruktur (10), die durch eine Mehrzahl von aufrecht nebeneinander angeordneten laminierten Sandwich-Platten (20) gebildet ist, wobei jede Platte einen Kern (24) und an der obersten Stirnfläche des Kerns eine nach oben offene Nut aufweist, die eine horizontale Drahtaufnahmenut (42) bildet und in bestimmten Platten vertikale Drahtaufnahmeschlitze (43) aufweist, die mit dem Kanal verbunden und an ihrem entsprechenden herabhängenden Ende durch eine Wand der entsprechenden Platte hindurch offen sind, **dadurch gekennzeichnet, daß** a) ein Gebäudestruktur-Kabelbaum (40) geschaffen wird, der zwischen Anschlußenden eine durchgehende, im wesentlichen einem vorbestimmten zu verdrahteten Abschnitt einer Wand entsprechende Länge und gleich viele in Längsrichtung beabstandete seitliche Stränge (41) aufweist wie die vorbestimmte Anzahl von vertikalen Schlitzen (43), die an ihren herabhängenden Enden durch eine Plattenwand hindurch offen sind, und daß b) die seitlichen Stränge (41) in die vertikalen Wandschlitze (43) gesteckt werden, während gleichzeitig die durchgehende Länge des Kabelbaums (40) in die horizontale Nut (42) gelegt wird.

2. Verfahren nach Anspruch 1, wobei der Kabelbaum Strekken von elektrischer Verdrahtung (40) aufweist, deren Länge in dem Kanal und in den Schlitzen jeweils im wesentlichen einer vorbestimmten Länge der horizontalen Nut (42) und der Länge des jeweiligen vertikalen Schlitzes (43) entspricht, der vom Drahtaufnahmekanal abgeht.

## Revendications

1. Procédé de câblage électrique des murs d'une structure de construction modulaire (10) formée par une pluralité de panneaux (20) sandwich stratifiés juxtaposés verticaux, chaque panneau comportant une partie centrale (24) et comportant une rainure s'ouvrant vers le haut dans la surface d'extrémité la plus en haut de la partie centrale formant une rainure horizontale de réception de câble (42) et comportant des fentes de réception de câble verticales (43) dans des panneaux sélectionnés communiquant avec le canal et ouvert à leur extrémité descendante respective à travers une paroi du panneau respectif, **caractérisé par** les étapes consistant à, a) fournir une structure de faisceau de câbles (40) de la structure de construction ayant une longueur continue, entre les extrémités terminales, sensiblement égale à une partie prédéterminée d'un mur à câbler et ayant des longueurs (41) s'étendant latéralement et longitudinalement espacées d'un nombre égal au nombre sélectionné de fentes verticales (43) ouvertes à leurs extrémités descendantes à travers une paroi du panneau, et, b) insérer lesdites longueurs latérales (41) dans les fentes du mur verticales (43) tout en plaçant simultanément la longueur continue de l'unité de faisceau de câbles (40) dans la rainure horizontale (42).

2. Procédé selon la revendication 1, dans lequel le faisceau de câbles comprend des longueurs de câble électrique (40), d'une longueur respectivement sensiblement égale à une longueur prédéterminée de la rainure horizontale (42) et à la longueur de la fente verticale respective (43) descendant depuis ledit canal de réception de câble dans ledit canal et lesdites fentes.
